# EUROPÄISCHE PATENTSCHRIFT

(11) **EP 3 503 769 B1**
(45) Veröffentlichungstag und Bekanntmachung des Hinweises auf die Patenterteilung: **30.09.2020**
(21) Anmeldenummer: 17761800.6
(22) Anmeldetag: 14.08.2017
(51) Int. Cl.: A47J 31/40, A47J 31/00, B67D 3/00, F16K 49/00, G01F 11/32

(54) **DOSIERVORRICHTUNG FÜR TEMPERIERTE GETRÄNKE**
METERING DEVICE FOR TEMPERATURE-CONTROLLED BEVERAGES
DISPOSITIF DE DOSAGE POUR BOISSONS TIÈDES

(30) Priorität: 26.08.2016 DE 102016010375
(43) Veröffentlichungstag der Anmeldung: 03.07.2019
(73) Patentinhaber: MPS Innovation GmbH, 6972 Fussach (AT)
(72) Erfinder: SALZGEBER, Stefan, 6971 Hard (AT); PRINZ, Maximilian, 6911 Lochau (AT); SCHWÄRZLER, Peter, 6972 Fussach (AT)
(74) Vertreter: Riebling, Peter
(86) Internationale Anmeldenummer: PCT/EP2017/000977
(87) Internationale Veröffentlichungsnummer: WO 2018/036649

(56) Entgegenhaltungen:
- GB-A- 755 917
- US-A- 3 515 312
- US-A- 5 097 991

## Beschreibung

Die Erfindung betrifft eine Dosiervorrichtung nach dem Oberbegriff des Patentanspruches 1.

Dosiervorrichtungen, Maßausgießer oder auch Portionierer für Getränke sind bereits aus dem Stand der Technik bekannt. Diese Vorrichtungen sind meist Apparate, die eine Betätigung von außen erfordern und bei jeder wiederholten und gleichen Betätigung eine vorgegebene Menge eines Fluids oder eines fließfähigen festen Stoffes aus einer Zuleitung oder einem Behälter ausgeben. Dosiervorrichtungen haben den Vorteil, dass die Getränke-Mixturen bequem und immer in der exakt gleichen Zusammensetzung zubereitet werden können. Ein weiterer Vorteil ist, dass Ausschankverluste vermieden werden.

Dosiervorrichtungen gibt es für stehende Flaschen, sowie für Flaschen, die mit der Öffnung nach unten (Über-Kopf) aufgehängt werden. Bei der Über-Kopf-Variante wird die Dosiervorrichtung zuerst an der Öffnung befestigt. Im Anschluss daran wird dann die Flasche mit der Öffnung nach unten in eine (Wand-) Halterung gestellt. Die Dosiervorrichtung besteht im Wesentlich aus einem Gehäuse mit einer Dosierkammer und einem vertikal bewegbaren Entnahmeverschluss. Um die dosierte Flüssigkeit zu entnehmen wird das zu füllende Glas vertikal nach oben gegen ein Dosierkreuz oder Drücker des Verschlusses gedrückt. Der Verschluss öffnet die Dosierkammer und gibt die vorportionierte Flüssigkeit frei, welche in das darunter liegende Glas fließt.

Die Gebrauchsmusterschrift DE 20 118 605 U1 offenbart ein Getränkeausgabegerät mit einer auf die Ausgabeeinheit kopfüber aufgesetzten Flasche mit einer trinkbaren Flüssigkeit. Die Flasche ist mit ihrem Flaschenhals in einem Kupplungsstutzen in der Ausgabeeinheit eingesetzt und über Leitungselemente mit dem Ausgabehahn verbunden. Im Bereich der Ausgabeeinheit ist eine Kühl- oder Heizeinrichtung angeordnet, mit welcher das Getränk auf die jeweilige Temperatur abgekühlt oder aufgeheizt werden kann.

Die Gebrauchsmusterschrift DE 20 2007 012 732 U offenbart eine Adaptervorrichtung zum Ankuppeln von Getränkedosen oder Flaschen, wobei die Dose in einer Über-Kopf-Stellung auf die Vorrichtung gesteckt wird. Gemäß dem Absatz [0045] kann die Schankanlage mit einer zusätzlichen Heizeinrichtung zum Erhitzen der Flüssigkeit ausgestattet werden.

Das Patentdokument US 5,097,991 A beschreibt auch eine Dosiervorrichtung mit einer Dosierkammer gemäß dem Stand der Technik.

Bei den Ausführungsformen gemäß dem Stand der Technik besteht der Nachteil, dass ein Aufheizen der Flüssigkeit ausschließlich während die Flüssigkeit fließt stattfindet (Prinzip Durchlauferhitzer). Eine genaue Endtemperaturregulierung ist nicht möglich, da die Aufwärmspanne von der Fließgeschwindigkeit und der Heizleistung abhängig ist jedoch die Heizleistung trotz veränderlicher Ausgangstemperatur nicht angepasst wird. Dies reicht daher bei extrem kalten Umgebungstemperarturen nicht aus, um das dosierte Getränke auf die gewünschte Endtemperatur zu erhitzen. Insbesondere in Skigebieten und hier an Schneebars besteht das Bedürfnis den Kunden mit einem dosierten Heißgetränk zu bedienen.

Des Weiteren ist es beim Stand der Technik nicht möglich innerhalb einer kurzen Zeitspanne mehrere, dosierte Heißgetränke schnell mit präziser Dosierung in Gläser abzugeben.

Der Erfindung liegt deshalb die Aufgabe zugrunde, eine Dosiervorrichtung bereitzustellen, welche kurz hintereinander und mehrmals, eine genau dosierte und temperierte Flüssigkeit, auch bei stark abweichenden Ausgangstemperaturen an ein Behältnisse ausgibt.

Zur Lösung der gestellten Aufgabe ist die Erfindung dadurch gekennzeichnet, dass die Dosiervorrichtung entlang ihrer Längsachse mindestens zwei unterschiedliche, beheizbare und/oder kühlbare Dosierkammern aufweist, welche über einen Ventilmechanismus miteinander verbunden sind. Die Ein- und Austrittsöffnungen der beiden Kammern werden bei der Entnahme der Flüssigkeit durch einen gemeinsamen, vertikal verschiebbaren Stößel geöffnet bzw. geschlossen.

Mit der gegebenen technischen Lehre ergibt sich der wesentliche Vorteil, dass aus der erfindungsgemäßen Dosiervorrichtung mehrmals hintereinander eine dosierte Flüssigkeit mit der gewünschten, gleichbleibenden Temperatur entnommen werden kann. Dies war mit den Dosiervorrichtungen nach dem Stand der Technik bisher nicht möglich, da die Flüssigkeit ausschließlich im Bereich der Entnahmeöffnung aufgeheizt wurde, was beispielsweise bei niedrigen Umgebungstemperaturen nicht ausreicht. Auch sah der Stand der Technik lediglich einen Durchlaufkühler vor, so dass bei einer schnellen, nacheinander folgenden Entnahme nicht eine gleichbleibende Temperatur gewährleistet werden konnte.

Bei einer ersten bevorzugten Ausführungsform besteht die Dosiervorrichtung aus einem Gehäuse, welches insgesamt zwei übereinander angeordnete Kammern aufweist. Die erste Kammer befindet sich im oberen Bereich des Gehäuses und weist eine Kupplungseinheit für die Aufnahme eines Adapters mit Ventil auf, in welche kopfüber eine Flasche mit einer trinkbaren Flüssigkeit einsetzbar ist. Bevorzugt wird die Flasche mit ihrem Flaschenhals in den Adapter geschraubt oder gesteckt und die Flasche dann samt dem Adapter in die Kupplungseinheit der ersten Kammer eingesetzt, wodurch ein sicherer Halt gewährleistet ist.

Ausgehend von der Flasche fließt die Flüssigkeit in eine erste Kammer. Das Volumen der ersten Kammer ist beispielweise für die Aufnahme von 80 ml einer Flüssigkeit ausgelegt. Die erste Kammer dient somit als erste Dosierkammer und ist temperierbar d.h. beheizbar und/oder kühlbar ausgebildet. Dadurch ist es erstmals möglich die Flüssigkeit, welche aus dem darüber angeordneten Vorratsbehältnis kommt, auf eine erste Temperatur zu erwärmen bzw. abzukühlen ohne die restliche im Originalbehältnis befindliche Flüssigkeit zu temperieren, da ein thermische Entkopplung besteht.

Bei einer bevorzugten Ausführungsform wird die trinkbare Flüssigkeit in der ersten Kammer auf beispielhaft 55° bis 75° erhitzt. Unterhalb der ersten (Dosier-) Kammer befindet sich eine zweite Kammer, welche über einen vertikalen Verbindungskanal mit innenliegendem Ventilmechanismus miteinander verbunden ist.

Die zweite (Dosier-) Kammer ist bevorzugt kleiner, als die erste Kammer ausgebildet und weist ein Volumen für die Aufnahme von beispielhaft circa 20 ml einer trinkbaren Flüssigkeit auf. Das Volumen der zweiten Kammer entspricht damit dem gewünschten, dosierten Volumen, welches an das darunter liegende Trinkgefäß abgeben werden soll.

Am unteren Ende weißt die zweite Kammer eine Öffnung auf, welche bevorzugt von dem Stößel des Ventilmechanismus verschlossen ist. Wird nun der Stößel in vertikaler Richtung nach oben geschoben, so wird die untere Öffnung der zweiten Kammer freigegeben und die dosierte Flüssigkeit kann ungehindert aus der zweiten Kammer in das darunter befindlich Behältnis (z.B. Trinkglas) fließen.

Bevor die unter Öffnung der zweiten Kammer geöffnet wird, verschließt jedoch der Stößel bei der vertikalen Bewegung nach oben den Verbindungskanal zwischen der zweiten und ersten Kammer. Dadurch wird insbesondere ein ungehindertes Auslaufen der Flüssigkeit ausgehend von der ersten Kammer in die zweite Kammer vermieden. Dies bewirkt auch, dass während des Zapfvorganges keine weitere Flüssigkeit in die zweite Kammer nachläuft und durch die geöffnete Öffnung in das Trinkglas fließt. Während des Zapfvorganges gelangt daher nur die dosierte Flüssigkeitsmenge der zweiten Kammer in das Trinkgefäß.

Beim Loslassen des Stößel des Ventilmechanismus wird der Auslass Richtung Trinkglas geschlossen und die Verbindung zwischen der ersten Kammer und der zweiten Kammer wieder geöffnet, wodurch erneut die abzugebende Menge vordosiert wird.

Entscheidend ist, dass bei der erfindungsgemäßen Dosiervorrichtung durch den Einsatz von zwei temperierbaren (Dosier-) Kammern stets eine ausreichende Menge der temperierten Flüssigkeit zur Verfügung steht. Dies wird insbesondere dadurch erreicht, dass die erste, größer ausgebildete Kammer die Flüssigkeit aus dem Vorratsbehälter bereits vortempertiert und damit die zweiten, kleiner ausgebildete Kammer lediglich eine geringe Temperaturdifferenz ausgleichen muss.

Die vorliegende Erfindung ist nicht auf die Entnahme einer Flüssigkeit aus einer Flasche beschränkt. Vielmehr kann die Flüssigkeit auch aus einem Kanister oder einem Tank entnommen werden. Es ist darüber hinaus auch möglich, dass die Kupplungseinheit bzw. der Adapter der ersten Kammer lediglich mit einem Schlauch verbunden ist, wobei die Flüssigkeit ausgehend von einem (entfernten) Tank der Dosiervorrichtung zugeführt wird. Darüber hinaus ist auch der Einsatz einer Pumpe oder eines Druckgasbehälters möglich, welcher mit geeignetem Druckminderer zusammen arbeitet.

Selbstverständlich kann die erfindungsgemäße Dosiervorrichtung auch als Zapfanlage, Schankanlage oder Getränkeschankanlage eingesetzt werden. Entscheidend ist, dass die Vorrichtung diverse Getränke aus Vorratsbehältern, wie z. B. Flaschen, Fässern (oftmals Kegs), Tanks, oder sogenannten BIBs=Bag in Box, auf eine gewünschte Temperatur erwärmt oder abkühlt und in Trinkgefäße abfüllt.

Mit der erfindungswesentlichen Dosiervorrichtung können sämtliche fließfähige Stoffe dosiert werden. So ist beispielsweise eine Dosierung von alkoholischen und nichtalkoholischen Getränken, Senf, Ketschup, Mayonnaise, süße Soßen, wie z.B. Himbeersoße oder Vanillesoße, salzige Soßen, insbesondere für Salate oder dergleichen möglich.

Bei einer weiteren Ausführungsform wird die Dosiervorrichtung im Bereich einer Massagepraxis zum Aufheizen und dossierten Abgeben von Massageöl eingesetzt.

Das Gehäuse der erfindungsgemäßen Dosiervorrichtung besteht bevorzugt aus Metall, wie z.B. Edelstahl, Kupfer oder Aluminium, was einen sehr hohen Reinheitsgrad aufweist. Für den Kammernkörper des Gehäuses sind jedoch auch andere Materialien, wie z.B. Kunststoffe, faserverstärkter Kunststoff oder dergleichen möglich. Generell wird ein leicht temperaturleitendes Material bevorzugt, da dadurch die Flüssigkeiten ausgehend von der Temperiervorrichtung leicht und schnell aufgeheizt werden kann.

Auch besteht die Möglichkeit, dass das Gehäuse aus einem anderen Werkstoff, als die (Dosier-)Kammern besteht. So kann beispielsweise das Gehäuse aus einem Kunststoff bestehen, während die Kammern aus einem Einsatz aus z.B. Edelstahl oder Glas gefertigt sind. Generell beansprucht die vorliegende Erfindung für alle verwendeten Bauteile sämtliche Werkstoffe.

Als Heizvorrichtung für die Dosiervorrichtung können sämtliche Geräte zum Erhitzen von Flüssigkeiten mit Hilfe von elektrischer Energie eingesetzt werden als auch Wärmeträgermedium, welches extern temperiert wird. Hierbei können sowohl der gesamte Gehäuse, als auch nur einzelne Teilbereiche, wie z.B. einzelnen Kammern beheizbar ausgebildet sein. Bevorzugt weisen die beiden übereinander angeordneten Kammern zwei unterschiedliche Heizelemente auf. Dadurch kann die Flüssigkeit in der ersten Kammer z.B. eine niedrigere Temperatur, als die Flüssigkeit in der zweiten aufweisen.

Selbstverständlich kann die erfindungsgemäße Dosiervorrichtung neben der Heizvorrichtung auch eine Kühlvorrichtung aufweisen, mit welcher die Flüssigkeiten in der ersten und zweiten Kammer auf die gewünschte Temperatur abgekühlt werden kann. Auch ist eine Kühlung des gesamten Gehäuses möglich. Um die einzelnen Flüssigkeiten innerhalb der Dosiervorrichtung abzukühlen, kann beispielsweise ein Kühlkompressor eingesetzt werden. Des Weiteren ist ein Durchlaufkühler möglich.

Der Einsatz der erfindungsgemäßen Dosiervorrichtung ist besonders im Außenbereich sinnvoll, da hier unter Umständen Temperaturen von -5° Grad vorliegen, der Gast jedoch z.B. einen Zwetschken-Frucht-Likör mit einer Temperatur von 30° Grad genießen will. In Bereich von Schneebars muss daher der Barkeeper in relativ kurzer Zeit eine gewisse Anzahl an Getränken mit gleichbleibender Temperatur bereitstellen können. Durch die vorgewärmte Flüssigkeitsmenge der ersten Kammer (z.B. 80 ml) können so in kürzester Zeit beispielhaft bis zu 20 Likörgetränke mit jeweils 20 ml und gleichbleibender Temperatur aus der zweiten Kammer ausgegeben werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert im Teilschnitt durch die erfindungsgemäße Dosiervorrichtung
- Figur 2:: Seitenansicht der Dosiervorrichtung
- Figur 3:: schematische Darstellung der Dosiervorrichtung
- Figur 4:: perspektivische Darstellung der Dosiervorrichtung
- Figur 5:: perspektivische Darstellung des Gehäuses
- Figur 6:: Seitenansicht der Dosiervorrichtung ohne Hub
- Figur 7:: Seitenansicht der Dosiervorrichtung mit Hub
- Figur 8:: Schnitt A-A der der Dosiervorrichtung mit Hub
- Figur 9:: Darstellung des erfindungsgemäßen Stößels in einer ersten Ausführungsform

Figur 10: Darstellung des erfindungsgemäßen Stößels in einer zweiten Ausführungsform

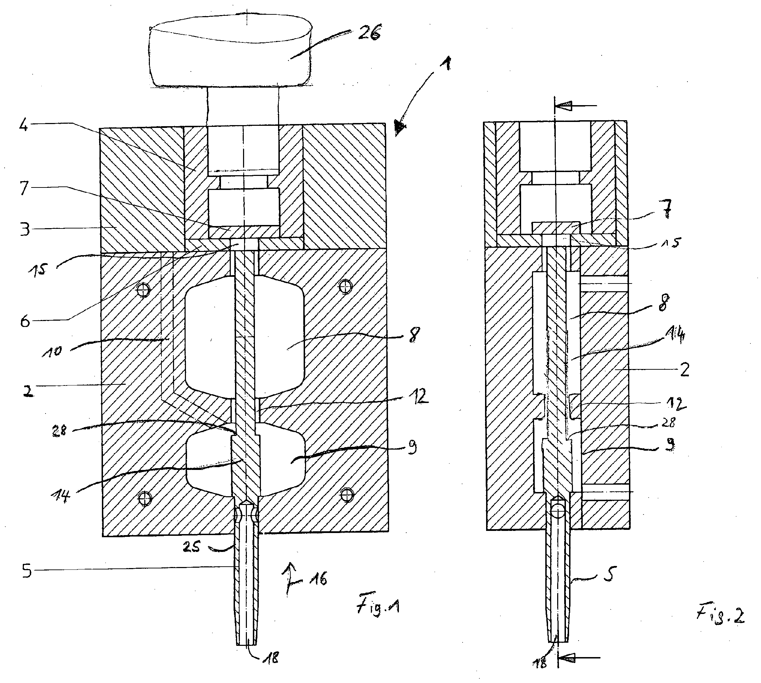

In Figur 1 ist allgemein dargestellt, dass die Dosiervorrichtung 1 im Wesentlichen aus einem Gehäuse 2 mit mindestens zwei (Dosier-) Kammern 8, 9 besteht. Das Gehäuse 2 weist im oberen Bereich ein Oberteil 3 auf. Das Oberteil 3 ist bevorzugt lösbar mit dem Gehäuse 2 verbunden und weist bevorzugt eine zylindrische Kupplungseinheit auf, innerhalb welcher ein Adapter 4 für den Vorratsbehälter 26 angeordnet wird.

Der Adapter 4 ist auswechselbar und dient als Fixiereinrichtung für den Vorratsbehälter 26. Mit Hilfe des Adapters 4 kann beispielsweise eine Flasche in der Über-Kopf-Position am Flaschenhals oder Flaschenbauch in der Dosiervorrichtung 1 gehalten werden. Der Adapter 4 kann jedoch auch dergestalt ausgebildet sein, dass er einen Schlauch oder Kanister hält, welche der ersten Kammer 8 die gewünschte Flüssigkeit über den Einlass 15 zuführt.

Wie bereits im allgemeinen Beschreibungsteil angegeben, kann die erfindungsgemäße Dosiervorrichtung 1 eine Flüssigkeit aus unterschiedlichen Vorratsbehältern 26 entnehmen. Der auswechselbare Adapter 4 stellt somit eine flüssigkeitsdichtende Verbindung zwischen dem Vorratsbehälter 26 und dem Gehäuse 2 bzw. dem Einlass 15 des Gehäuses 2 her. Im Bereich des Einlasses 15 befindet sich ferner ein Verschluss 7, welche den Einlass 15 gegenüber dem Vorratsbehälter 26 verschließt. Der Verschluss 7 wird bevorzugt durch den Stößel 5 betätigt.

Der Verschluss 7 ist in einer Kupplungseinheit 6 angeordnet, welche lösbar gegenüber dem Gehäuse 2 angeordnet ist. Die lösbare Kupplungseinheit 6 ermöglicht u.a. den Ausbau des Verschlusses 7 für Reinigungs- und Wartungsarbeiten und ferner können dadurch unterschiedliche Verschlussarten 7 in das gleiche Gehäuse 2 eingesetzt werden. Generell ist der Verschluss 7 so ausgebildet, dass er bei einem zurückgezogenen Stößel 5 aufgrund der Schwerkraft oder einer Feder oder dem Flüssigkeitsdruck des Vorratsbehälters 26 in seine Schließstellung fällt. Wird der Stößel 5 in vertikaler Richtung nach oben geschoben, so öffnet sich der Verschluss 7 und gibt den Einlass 15 für die Flüssigkeit des Vorratsbehälters 26 frei.

Ausgehend von dem Vorratsbehälter 26 läuft nun bei geöffneten Verschluss 7 die Flüssigkeit durch den Einlass 15 in die erste Kammer 8. Die erste Kammer 8 ist so ausgebildet, dass sie bevorzugt ein Flüssigkeitsvolumen von circa 80 ml aufnehmen kann. Hierauf ist die Erfindung jedoch nicht beschränkt. Die Kammern 8 und 9 können vielmehr sämtliche Volumina aufweisen.

Unterhalb der ersten (Dosier-) Kammer 8 befindet sich eine zweite (Dosier-) Kammer 9, welche durch einen Verbindungskanal 12 mit der ersten Kammer 8 verbunden ist. Die zweite Kammer 9 ist bevorzugt kleiner, als die erste Kammer 8 ausgebildet und weist beispielsweise ein Volumen für die Aufnahme von 20 ml Flüssigkeit auf. Die zweite Kammer 9 weist auf der Unterseite einen Auslass 19 auf, durch welche die Flüssigkeit der zweiten Kammer 9 austritt.

Entlang einer vertikalen Achse erstreckt sich durch das Gehäuse 2, insbesondere durch den Auslass 19, die zweite Kammer 9, den Verbindungskanal 12, die erste Kammer 8, sowie den Einlass 15 ein Stößel 5. Der Stößel 5 ist vertikal verschiebbar innerhalb des Gehäuses 2 angeordnet und weist entlang seiner Längsachse unterschiedliche Durchmesser auf, so dass bei einer Verschiebung des Stößels 5 in Pfeilrichtung 16 die Öffnung 18 innerhalb des Stößels 5 freigegeben wird, der Verbindungskanal 12 geschlossen und gleichzeitig der Verschluss 7 geöffnet wird.

Der Stößel 5 weist im Bereich der zweiten Kammer 9 einen Abschnitt 24 mit einem vergrößerten Durchmesser auf, so dass dieser dichtend auf dem Auslass 19 aufliegt. Bei einer Verschiebung des Stößels 5 in Pfeilrichtung 16 wird der Abschnitt 14 in vertikaler Richtung verschoben, so dass ein Abschnitt 25 mit kleinerem Durchmesser die Öffnung 18 freigibt.
Bevorzugt weist der Stößel 5 im Bereich des Abschnittes 25 eine Bohrung auf, welche als Öffnung 18 für die Flüssigkeit aus der zweiten Kammer 9 ausgebildet ist.

Die dosierte Flüssigkeit kann ausgehend von der zweiten Kammer 9 bevorzugt auf zwei Arten an das darunter liegende Glas abgegeben werden:
- Der Stößel 5 weist eine Öffnung 18 auf, welche als innenliegende T-förmige Bohrung ausgebildet ist. Im geschlossenen Zustand der Dosiervorrichtung wird die Öffnung 18 des Stößels 5 durch die Wände des Auslasses 19 verschlossen, so dass keine Flüssigkeiten austreten können. Bei einer vertikalen Verschiebung des Stößels 5 nach oben, wird die T-förmige Öffnung in den Bereich der Kammer 9 gebracht, wodurch die Flüssigkeit durch die Öffnung 18 aus der Kammer ausfließen kann.
- Der Stößel 5 ist im Bereich des Auslasses 19 so ausgebildet, dass bei einer Verschiebung des Stößels in vertikaler Richtung nach oben, der Auslass 19 freigegeben wird und die Flüssigkeit aus der Kammer 9 durch den Auslass 19 ausfließt.

Mit der erfindungsgemäßen Dosiervorrichtung 1 ist es damit erstmals möglich eine dosierte Flüssigkeitsmenge aus der zweiten Kammer 9 durch den Auslass 19 bzw. die Öffnung 18 an ein Trinkgefäß 21 auszugeben, während gleichzeitig eine Flüssigkeit ausgehend von dem Vorratsbehälter 26 in die erste Kammer 8 nachläuft.

Anhand der Figur 1 lässt sich ferner entnehmen, dass das Gehäuse 2 eine Entlüftung 10 für die zweite Kammer 9 aufweist, welche als separater Kanal ausgebildet ist.

Mit der Figur 2 wird die Dosiervorrichtung 1 im seitlichen Schnitt dargestellt. Der Verschluss 7 liegt auf dem Einlass 15 auf und verschließt damit die erste Kammer 8 gegenüber der Flüssigkeit des Vorratsbehälters 26.

Der Stößel 5 befindet sich in der Ausgangssituation. Unter Ausgangssituation versteht die vorliegende Erfindung, dass der Verschluss 7 geschlossen ist, der Verbindungskanal 12 geöffnet und die Öffnung 19 verschlossen ist.

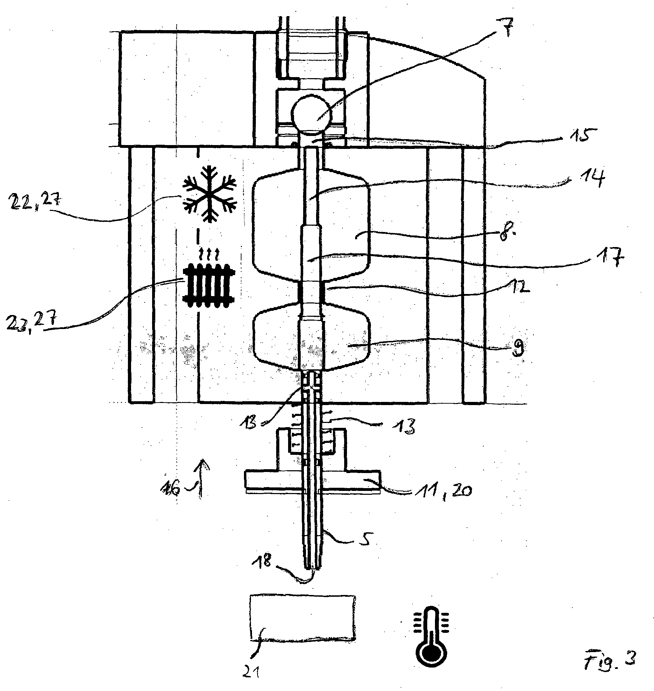

Gemäß der Figur 3 weist das Gehäuse 2 der Dosiervorrichtung 1 mindestens eine Temperiereinrichtung 27 für Flüssigkeiten auf, welche aus mindestens einer Kühl- und/oder eine Heizvorrichtung 22, 23 besteht. Mit Hilfe der Temperiereinrichtung 27 lassen sich die Flüssigkeiten in den Kammern 8, 9 entweder abkühlen oder aufheizen.

Bevorzugt weist jede Kammer 8, 9 eine eigene Temperiereinrichtung 27 auf, so dass beispielsweise die Flüssigkeit in der ersten Kammer 8 auf eine Temperatur in Höhe von circa 30° C erwärmt wird. Es findet somit in der ersten Kammer 8 eine Vorwärmung der Flüssigkeit des Vorratsbehälters 26 für die zweite Kammer 9 statt. Dies hat den wesentlichen Vorteil, dass nun der zweiten Kammer 9 stets eine ausreichende, vorgewärmte Flüssigkeitsmenge zur Verfügung steht.

Mit der erfindungsgemäßen Ausführungsform sind zahlreiche, unterschiedliche Temperiervarianten hinsichtlich der Flüssigkeiten in der ersten und zweiten Kammer 8, 9 möglich, wie z.B.:
- die erste und zweite Kammer 8, 9 weisen die gleiche Temperatur auf oder
- Die erste Kammer 8 hat eine höhere Temperatur, als die zweite Kammer 9 oder
- die erste Kammer 8 hat eine niedrigere Temperatur, als die zweite Kammer 9 oder
- die erste Kammer 8 hat eine höhere Temperatur als die Temperatur des Vorratsbehälters 26 und eine niedrigere Temperatur als die Temperatur der zweiten Kammer 9.

Die oben genannten Varianten sind nur beispielhaft. Die vorliegende Erfindung beansprucht vielmehr sämtliche Temperaturvarianten.

Der Stößel 5 weist im Bereich des Auslasses 19 ein Dosierkreuz 11 auf. Das Dosierkreuz 11 ist mit einem Federpaket 13 elastisch gegenüber dem Gehäuse 2 angeordnet. Bevorzugt wird das Trinkgefäß 21 mit seinen Rändern von unten gegen das Dosierkreuz 11 gedrückt, wodurch der Stößel 5 vertikal nach oben geschoben wird und der Auslass 19 die Flüssigkeit aus der zweiten Kammer 9 an das Trinkgefäß 21 abgibt.

Neben dem Dosierkreuz 11 sind auch andere Zapfventile 20 bei der Dosiervorrichtung 1 möglich. Der Verschluss 7 ist gemäß der Figur 3 als Kugelventil ausgebildet.

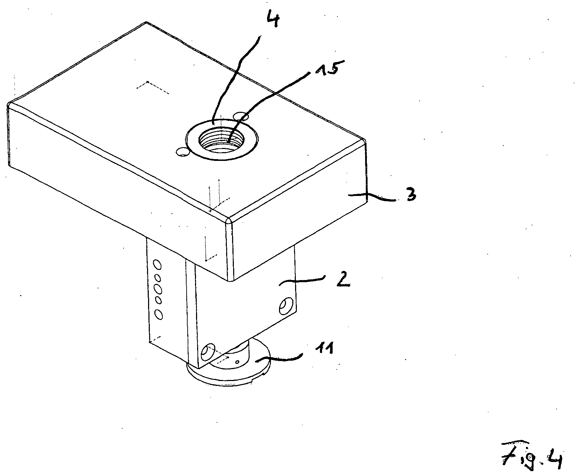

Figur 4 zeigt perspektivisch die Dosiervorrichtung 1, welche im Wesentlichen aus dem Gehäuse 2 und dem Oberteil 3 besteht. Im unteren Bereich ist das Dosierkreuz 11 dargestellt, welches in Verbindung mit dem Stößel 5 steht.

Das Oberteil 3 weist eine Ausnehmung auf innerhalb welcher der runde Adapter 4 für den Vorratsbehälter 26 angeordnet ist. Unterhalb des Adapters 4 befindet sich der Einlass 15.

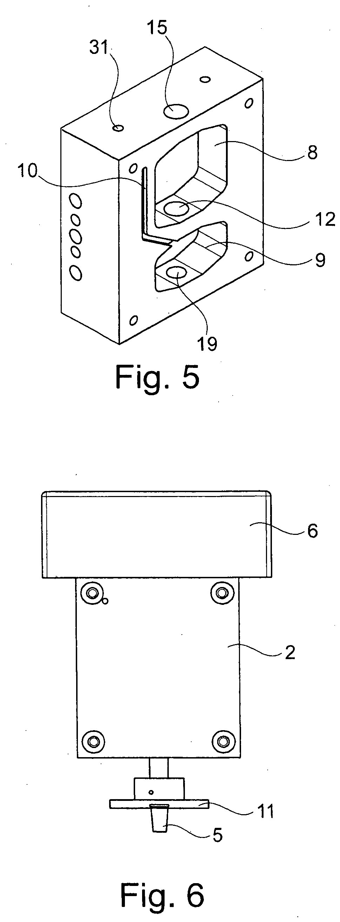

Mit der Figur 5 wird das Gehäuse 2 der Dosiervorrichtung 1 gezeigt. Das Gehäuse 2 weist im Wesentlichen zwei, übereinander angeordnete Kammern 8, 9 auf, welche durch einen Verbindungskanal 12 flüssigkeitsleitend miteinander verbunden sind. Der Einlass 15, die erste Kammer 8, der Verbindungskanal 12, die zweite Kammer 9, sowie den Auslass 19 befinden sich alle auf einer Achse. Dadurch ist es möglich, dass der Stößel 5 im Gehäuse 2 vertikal verschiebbar angeordnet ist und bei einer vertikalen Betätigung die zweite Kammer öffnet, den Verbindungkanal 12 schließt und den Einlass 15 öffnet.

Auf der Stirnseite der Dosiervorrichtung 1 befindet sich mindestens eine Bohrung 31, welche sich in vertikaler Richtung durch die Dosiervorrichtung 1 erstrecken und in welche mindesten ein Heizelement der Heizvorrichtung 23 oder ein Kühlelement der Kühlvorrichtung 22 einsetzbar sind. Je nach Anforderung können mehrere Bohrungen vorhanden sein, um die Heiz- oder Kühlleistung zu erhöhen. Alternativ kann auf den Gehäusekörper auch eine Heiz-oder Kühlplatte angeflanscht werden.

Selbstverständlich ist es auch möglich, dass die Dosiervorrichtung 1 horizontale Bohrungen 31 aufweist, welche beispielsweise vor oder hinter den Kammern 8, 9 verlaufen. Entscheidend ist, dass sich die Bohrungen 31 relativ nahe im Bereich der Kammern 8, 9 befinden, um ein schnelles und effektives Aufheizen bzw. Abkühlen der Flüssigkeit zu erreichen.

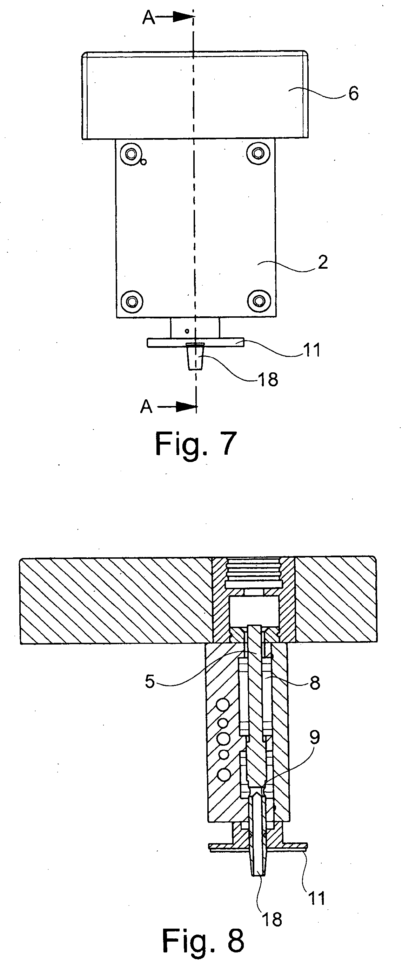

Mit der Figur 6 wird die Dosiervorrichtung 1 ohne Hub in der Seitenansicht gezeigt. Figur 7 zeigt die Dosiervorrichtung 1 mit Hub, wobei das Dosierkreuz 11 vertikal aufwärts bewegt wurde.

Mit der Figur 8 wird der Schnitt A-A durch die Dosiervorrichtung 1 gemäß Figur 7 gezeigt. Beispielhaft wird gezeigt, dass der Stößel 5 eine vertikale Verschiebung, d.h. einen Hub von 11 mm innerhalb des Gehäuses 2 durchführt.

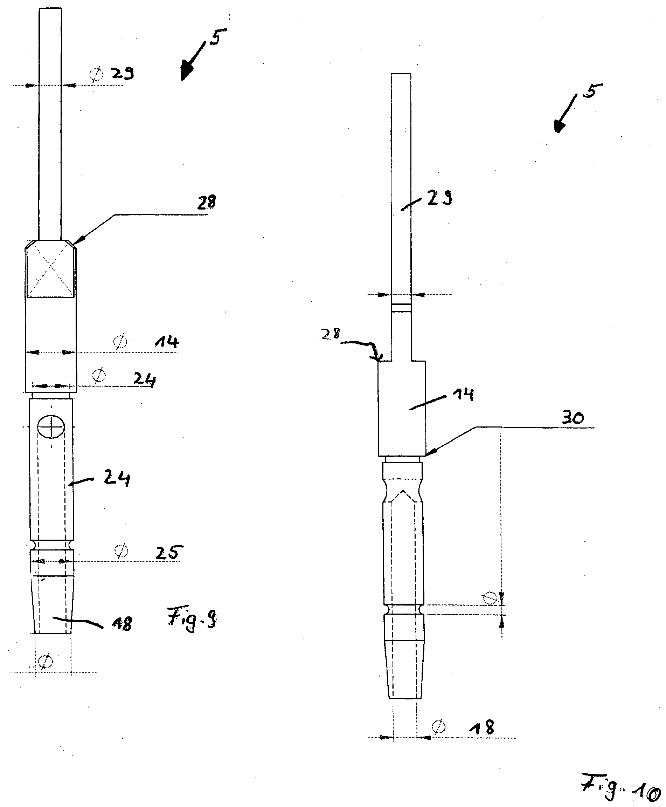

Mit den Figuren 9 und 10 wird der erfindungswesentliche Stößel 5 in Drauf- und Seitenansicht gezeigt.

Im Ausgangszustand liegt der Stößel 5 mit seinem breiteren Abschnitt 14 und dessen Dichtfläche 30 auf dem Auslass 19 der zweiten Kammer 9 auf und dichtet diesen gegenüber dem Gehäuse 2 ab. Bei einer vertikalen Bewegung des Stößels 5 wird die Dichtfläche 30 von dem Auslass 19 abgehoben, wodurch die dosierte Flüssigkeitsmenge aus der zweiten Kammer 9 durch die Öffnung 18 in das Trinkgefäß 21 fließt.

Die Länge des breiteren Abschnitts 14 ist so gewählt, dass bei einer vertikalen Bewegung des Stößels 5 der Auslass 19 freigegeben und kurz zuvor der Verbindungskanal 18 mit der Dichtfläche 28 des Abschnitts 14 geschlossen wird.

Der Stößel 5 gemäß der Figur 9 weist einen ersten Abschnitt 29 auf. Der Durchmesser des Abschnittes 29 ist kleiner als der Durchmesser des darunter liegenden Abschnitts 14. Im eingebauten Zustand des Stößels 5 erstreckt sich der Abschnitt 29 durch die erste Kammer 8 und den Einlass 15. Die Länge des Abschnittes 29 des Stößels 5 ist hierbei so gewählt, dass durch die vertikale Verschiebung des Stößels 5 mit beispielsweise einem Hub von 11 mm, gleichzeitig der Verschluss 7 angehoben wird und die Flüssigkeit ausgehend von dem Vorratsbehälter 26 in die erste Kammer 8 strömt.

Bei einer vertikalen Verschiebung des Stößels 5 nach oben legt sich ferner der breitere Abschnitte 14 mit seiner Dichtfläche 28 von unten an den Verbindungskanal 12 der zweiten Kammer 9 an und dichtet diese gegenüber der Flüssigkeit der Kammer 8 respektive somit auch des Vorratsbehälters 26 ab.

Figur 10 zeigt eine gedrehte Ausführungsform der Figur 9, wobei der Stößels 5 im Abschnitt 14 ausschließlich scharfkantige Dichtflächen 28, 30 aufweist, welche eine Abdichtung gegenüber dem Verbindungskanal 12 und dem Auslass 19 bewirken.

Entscheidend bei der erfindungsgemäßen Dosiervorrichtung ist, dass mit nur einer vertikalen Bewegung des Stößels 5 die zweite Kammer 9 geöffnet wird und die Verbindung zwischen der ersten und zweiten Kammer geschlossen wird. Gleichzeitig wird der Verschluss 7 geöffnet, so dass neue Flüssigkeit ausgehend von einem Vorratsbehälter 26 in die ersten Kammer 8 nachfließen kann.

Die erfindungsgemäße Dosiervorrichtung 1 hat damit den Vorteil, dass eine erste Flüssigkeitsmenge mit einer Temperiereinrichtung auf eine bestimmte Temperatur aufgewärmt oder abgekühlt wird, so dass der zweiten Kammer 9 bereits eine ausreichende Flüssigkeitsmenge mit gewünschter Temperatur zur Verfügung steht. Dadurch kann in kurzen Abständen aus der Dosiervorrichtung eine dosierte Flüssigkeit mit der gewünschten Temperatur entnommen werden.

Die Dosiervorrichtung 1 ist nicht auf zwei, übereinander angeordnete Kammern 8, 9 beschränkt. Selbstverständlich können beispielsweise auch drei oder mehr Kammern übereinander angeordnet sein.

Entscheidend ist, dass bei einer Betätigung des Stößels (5), dieser aufgrund seiner Geometrie alle Ein- und Austrittsöffnungen mit nur einer Hubbewegung öffnet oder verschließt. Der Stößel (5) hat damit eine Art Ventilfunktion, welche flüssigkeitsabdichtend den Auslass (19) der zweiten Kammer (9) und/oder den Verbindungskanal (12), sowie den Verschluss (7) öffnet oder verschließt.

### Zeichnungslegende

1. Dosiervorrichtung
2. Gehäuse
3. Oberteil
4. Adapter
5. Stößel
6. Kupplungseinheit
7. Verschluss
8. 1.Kammer
9. 2.Kammer
10. Entlüftung
11. Dosierkreuz
12. Verbindungskanal
13. Federpaket
14. Abschnitt von 5
15. Einlass
16. Pfeilrichtung (oben)
17. Erweiterung
18. Öffnung
19. Auslass
20. Zapfventil
21. Trinkgefäß
22. Kühlvorrichtung
23. Heizvorrichtung
24. Abschnitt (erste Kammer)
25. Abschnitt (Öffnung 19)
26. Vorratsbehälter
27. T emperiereinrichtung
28. Dichtfläche (oben)
29. Abschnitt
30. Dichtfläche (unten)
31. Bohrungen für Kühl- oder Heizvorrichtung 22, 23

## Patentansprüche

1. Dosiervorrichtung (1) zur dosierten Entnahme von fließfähigen Getränken und Soßen aus mindestens einem Vorratsbehälter (26), bestehend aus mindestens einer Kammer (8, 9), welche einen Einlass (15) für die Aufnahme der Flüssigkeit aus dem Vorratsbehälter (26) und einen Auslass (19) zur Abgabe der dosierten Flüssigkeit in ein Gefäß (21) aufweist, wobei die Dosiervorrichtung (1) mindestens zwei übereinander angeordnete Kammern (8, 9) aufweist, welche durch einen Verbindungskanal (12) flüssigkeitsleitend miteinander verbunden sind und dass sich ein vertikal verschiebbarer Stößel (5) durch den Auslass (19), die zweite Kammer (9), den Verbindungskanal (12), die erste Kammer (8) und den Einlass (15) erstreckt und der Stößel (5) je nach vertikaler Position den Auslass (19) und/oder den Verbindungskanal (12) verschließt, **dadurch gekennzeichnet, dass** die Dosiervorrichtung (1) aus einem einteiligen, blockartigen Gehäuse (2) besteht, welches die mindestens zwei Kammern (8, 9) aufweist und dass die Dosiervorrichtung (1) mindestens eine Temperiereinrichtung (22, 23, 27) aufweist, welche die dosierte Flüssigkeit aufwärmt oder abkühlt.

2. Dosiervorrichtung (1) nach Anspruch 1, **dadurch gekennzeichnet, dass** der Stößel (5) einteilig ausgebildet ist und einen Abschnitt (14) mit einem größeren Durchmesser und mindestens zwei Dichtflächen (28, 30) aufweist, welche sich flüssigkeitsabdichtend an den Auslass (19) der zweiten Kammer (9) und/oder den Verbindungskanal (12) anlegen.

3. Dosiervorrichtung (1) nach Anspruch 1 oder Anspruch 2, **dadurch gekennzeichnet, dass** die Dosiervorrichtung (1) einen auswechselbaren Adapter (4) aufweist, welcher eine flüssigkeitsleitende Verbindung zwischen unterschiedlichen Vorratsbehältern (26) und dem Einlass (15) herstellt.

4. Dosiervorrichtung (1) nach einem der Ansprüche 1 bis 3, **dadurch gekennzeichnet, dass** die Dosiervorrichtung (1) im Bereich des Einlasses (15) einen bewegbaren Verschluss (7) aufweist, welcher von dem Stößel (5) betätigbar ist.

5. Dosiervorrichtung (1) nach einem der Ansprüche 1 bis 4, **dadurch gekennzeichnet, dass** die erste Kammer (8) größer als die zweite Kammer (9) ausgebildet ist.

6. Dosiervorrichtung (1) nach einem der Ansprüche 1 bis 5, **dadurch gekennzeichnet, dass** jede Kammer (8, 9) eine eigene Temperiereinrichtung (22, 23, 27) aufweist.

7. Dosiervorrichtung (1) nach einem der Ansprüche 1 bis 6, **dadurch gekennzeichnet, dass** die Kammern (8, 9) eine gemeinsame Temperiereinrichtung (22, 23, 27) aufweisen.

8. Dosiervorrichtung (1) nach einem der Ansprüche 1 bis 7, **dadurch gekennzeichnet, dass** der Stößel (5) im Bereich des Auslasses (19) mit einem Zapfventil (20) koppelbar ist.

9. Dosiervorrichtung (1) nach einem der Ansprüche 1 bis 8, **dadurch gekennzeichnet, dass** der Stößel (5) im Bereich des Auslasses (19) ein Dosierkreuz (11) aufweist, welches sich mit einem Federpaket (13) in vertikaler Richtung gegenüber der Unterseite des Gehäuses (2) abstützt.

10. Dosiervorrichtung (1) nach einem der Ansprüche 1 bis 9, **dadurch gekennzeichnet, dass** die Dosiervorrichtung (1) aus Edelstahl besteht.

11. Dosiervorrichtung (1) nach einem der Ansprüche 1 bis 9, **dadurch gekennzeichnet, dass** die Dosiervorrichtung (1) aus Aluminium besteht.

12. Dosiervorrichtung (1) nach einem der Ansprüche 1 bis 11, **dadurch gekennzeichnet, dass** der Adapter (4) innerhalb eines Oberteils (3) angeordnet ist, welches lösbar mit dem Gehäuse (2) verbunden ist.

13. Dosiervorrichtung (1) nach einem der Ansprüche 1 bis 12, **dadurch gekennzeichnet, dass** das gesamte Gehäuse (2) beheizbar oder kühlbar ausgebildet ist.

14. Dosiervorrichtung (1) nach einem der Ansprüche 1 bis 13, **dadurch gekennzeichnet, dass** das Gehäuse (2) aus einem leicht temperaturleitenden Material besteht.

## Claims

1. Metering device (1) for metered removal of pourable drinks and sauces from at least one storage container (26) consisting of at least one chamber (8, 9) which has an inlet (15) for receiving the liquid from the storage container (26) and an outlet (19) for delivering the metered liquid into a vessel (21), wherein the metering device (1) has at least two chambers (8, 9) arranged one above another which are connected to one another in liquid-conducting manner by a connecting channel (12) and in that a vertically displaceable plunger (5) extends through the outlet (19), the second chamber (9), the connecting channel (12), the first chamber (8) and the inlet (15) and the plunger (5), depending on the vertical position, closes the outlet (19) and/or the connecting channel (12), **characterised in that** the metering device (1) consists of a one-part, block-like housing (2) which has the at least two chambers (8, 9) and **in that** the metering device (1) has at least one temperature-control device (22, 23, 27) which heats up or cools down the metered liquid.

2. Metering device (1) according to claim 1, **characterised in that** the plunger (5) is designed to have one part and has a section (14) with a greater diameter and at least two sealing surfaces (28, 30) which are placed in liquid-sealing manner on the outlet (19) of the second chamber (9) and/or the connecting channel (12).

3. Metering device (1) according to claim 1 or claim 2, **characterised in that** the metering device (1) has a replaceable adapter (4) which produces a liquid-conducting connection between different storage containers (26) and the inlet (15).

4. Metering device (1) according to one of claims 1 to 3, **characterised in that** the metering device (1) has a movable closure (7), which can be actuated by the plunger (5), in the region of the inlet (15).

5. Metering device (1) according to one of claims 1 to 4, **characterised in that** the first chamber (8) is designed to be larger than the second chamber (9).

6. Metering device (1) according to one of claims 1 to 5, **characterised in that** each chamber (8, 9) has a separate temperature-control device (22, 23, 27).

7. Metering device (1) according to one of claims 1 to 6, **characterised in that** the chambers (8, 9) have a common temperature-control device (22, 23, 27).

8. Metering device (1) according to one of claims 1 to 7, **characterised in that** the plunger (5) can be coupled to a fill nozzle (20) in the region of the outlet (19).

9. Metering device (1) according to one of claims 1 to 8, **characterised in that** the plunger (5) has a metering junction (11), which is supported by a spring assembly (13) in vertical direction with respect to the underside of the housing (2), in the region of the outlet (19).

10. Metering device (1) according to one of claims 1 to 9, **characterised in that** the metering device (1) consists of stainless steel.

11. Metering device (1) according to one of claims 1 to 9, **characterised in that** the metering device (1) consists of aluminium.

12. Metering device (1) according to one of claims 1 to 11, **characterised in that** the adapter (4) is arranged within an upper part (3) which is connected to the housing (2) to be releasable.

13. Metering device (1) according to one of claims 1 to 12, **characterised in that** the entire housing (2) is designed so it can be heated or cooled.

14. Metering device (1) according to one of claims 1 to 13, **characterised in that** the housing (2) consists of a slightly heat-conductive material.

## Revendications

1. Dispositif de dosage (1) pour le prélèvement dosé de boissons et sauces fluides dans au moins un réservoir (26), composé d'au moins une chambre (8, 9) qui comporte une entrée (15) pour la réception du liquide depuis le réservoir (26) et une sortie (19) pour fournir le liquide dosé à un récipient (21), dans lequel le dispositif de dosage (1) comporte au moins deux chambres (8, 9) superposées qui sont reliées entre elles, en communication de liquide, par un conduit de liaison (12), et un poussoir (5) coulissant verticalement s'étend à travers la sortie (19), la deuxième chambre (9), le conduit de liaison (12), la première chambre (8) et l'entrée (15), et le poussoir (5), suivant sa position verticale, obture la sortie (19) et/ou le conduit de liaison (12), **caractérisé en ce que** le dispositif de dosage (1) se compose d'un boîtier d'une seule pièce en forme de bloc (2) qui comporte les au moins deux chambres (8, 9) et **en ce que** le dispositif de dosage (1) comporte au moins un dispositif d'équilibrage de température (22, 23, 27) qui chauffe ou refroidit le liquide dosé.

2. Dispositif de dosage (1) selon la revendication 1, **caractérisé en ce que** le poussoir (5) est formé d'une seule pièce et comporte une section (14) avec un plus grand diamètre et au moins deux surfaces d'étanchéité (28, 30) qui s'appliquent de manière étanche au liquide contre la sortie (19) de la deuxième chambre (9) et/ou le conduit de liaison (12).

3. Dispositif de dosage (1) selon la revendication 1 ou la revendication 2, **caractérisé en ce que** le dispositif de dosage (1) comporte un adaptateur remplaçable (4) qui réalise une liaison de communication de liquide entre différents réservoirs (26) et l'entrée (15).

4. Dispositif de dosage (1) selon l'une des revendications 1 à 3, **caractérisé en ce que** le dispositif de dosage (1) comporte dans la zone de l'entrée (15) un obturateur mobile (7) qui est apte à être actionné par le poussoir (5).

5. Dispositif de dosage (1) selon l'une des revendications 1 à 4, **caractérisé en ce que** la première chambre (8) est plus grande que la deuxième chambre (9).

6. Dispositif de dosage (1) selon l'une des revendications 1 à 5, **caractérisé en ce que** chaque chambre (8, 9) comporte un dispositif d'équilibrage de température (22, 23, 27) propre.

7. Dispositif de dosage (1) selon l'une des revendications 1 à 6, **caractérisé en ce que** les chambres (8, 9) comportent un dispositif d'équilibrage de température (22, 23, 27) commun.

8. Dispositif de dosage (1) selon l'une des revendications 1 à 7, **caractérisé en ce que** le poussoir (5) est apte à être couplé dans la zone de la sortie (19) à une vanne de distribution (20).

9. Dispositif de dosage (1) selon l'une des revendications 1 à 8, **caractérisé en ce que** le poussoir (5) comporte dans la zone de la sortie (19) un élément de dosage en croix (11) qui s'appuie avec un bloc-ressort (13) dans la direction verticale par rapport au côté inférieur du boîtier (2).

10. Dispositif de dosage (1) selon l'une des revendications 1 à 9, **caractérisé en ce que** le dispositif de dosage (1) se compose d'acier fin.

11. Dispositif de dosage (1) selon l'une des revendications 1 à 9, **caractérisé en ce que** le dispositif de dosage (1) se compose d'aluminium.

12. Dispositif de dosage (1) selon l'une des revendications 1 à 11, **caractérisé en ce que** l'adaptateur (4) est disposé à l'intérieur d'un élément supérieur (3) qui est relié de manière amovible au boîtier (2).

13. Dispositif de dosage (1) selon l'une des revendications 1 à 12, **caractérisé en ce que** tout le boîtier (2) est formé pour pouvoir être chauffé ou pour pouvoir être refroidi.

14. Dispositif de dosage (1) selon l'une des revendications 1 à 13, **caractérisé en ce que** le boîtier (2) se compose d'un matériau facilement conducteur thermique.
